# EUROPÄISCHE PATENTSCHRIFT

(11) **EP 3 807 614 B1**
(45) Veröffentlichungstag und Bekanntmachung des Hinweises auf die Patenterteilung: **01.05.2024**
(21) Anmeldenummer: 20756765.2
(22) Anmeldetag: 06.07.2020
(51) Int. Cl.: G01N 1/06

(54) **MIKROTOM**
MICROTOME
MICROTOME

(30) Priorität: 03.09.2019 DE 102019213363
(43) Veröffentlichungstag der Anmeldung: 21.04.2021
(73) Patentinhaber: PFM Medical AG, 50996 Köln (DE)
(72) Erfinder: KRAUS, Steffen, 69207 Sandhausen (DE); SCHNEIDER, Erwin, 69226 Nußloch (DE)
(74) Vertreter: Ullrich & Naumann PartG mbB
(86) Internationale Anmeldenummer: PCT/DE2020/200055
(87) Internationale Veröffentlichungsnummer: WO 2021/043376

(56) Entgegenhaltungen:
- EP-A1- 3 246 690
- DE-A1- 4 205 258
- DE-B1- 1 772 189
- US-A- 3 628 386
- US-A- 3 785 234
- US-A1- 2018 136 087

## Beschreibung

Die Erfindung betrifft ein Mikrotom gemäß Oberbegriff des Anspruchs 1.

Aus der DE 10 2011 112 450 A1 ist ein Mikrotom in Form eines Rotationsmikrotoms bekannt, wobei das Mikrotom ein einen Antrieb aufweisendes Mikrometerwerk zur Erzeugung einer Relativbewegung zwischen einer Objekthalteeinrichtung und einem in einer Messerhalteeinrichtung fixierten Messer aufweist. Dabei bewegt der Antrieb die Objekthalteeinrichtung im Wesentlichen auf und ab, sodass ein mittels der Objekthalteeinrichtung gehaltenes Objekt zum Erzeugen von Schnitten an dem Messer entlang geführt werden kann.

Bekannte Mikrotome weisen darüber hinaus auch eine auf das Mikrometerwerk wirkenden Stelleinrichtung zur Beeinflussung der Relativbewegung zwischen der Objekthalteeinrichtung und dem Messer auf. Eine derartige Stelleinrichtung kann eine Zustelleinrichtung und eine mit der Zustelleinrichtung zusammenwirkende Trimmeinrichtung aufweisen. Die Zustelleinrichtung ist bei dem bekannten Mikrotom dafür verantwortlich, die Objekthalteeinrichtung mit dem Objekt in gewünschter Weise um eine vorgebbare Zustelldistanz zum Messer oder zur Messerhalteeinrichtung zu bewegen, sodass gegebenenfalls Schnitt für Schnitt mit der gewünschten Schnittdicke erzeugt werden kann. Die Trimmeinrichtung ist bei dem bekannten Mikrotom dafür vorgesehen, die Zustelldistanz vorzugsweise in vorgebbaren unterschiedlichen Schritten zu vergrößern, um beispielsweise zu Beginn einer Erzeugung von Schnitten in einem Zielbereich zunächst zeitsparend dickere Schnitte eines äußeren Bereichs des Objekts abzutragen, um schneller in den eigentlichen Zielbereich des Objekts zu gelangen. Dabei kann eine übliche Zustelldistanz beispielsweise 2 oder 3 µm und eine während einer Trimmung vergrößerte Zustelldistanz beispielsweise 10 µm oder 20 µm betragen.

Bei einem bekannten Mikrotom findet während eines üblichen Betriebs zur Erzeugung eines Schnitts aus einem Objekt eine im Wesentlichen 4-schrittige Relativbewegung zwischen der Objekthalteeinrichtung und der Messerhalteeinrichtung bzw. zwischen dem Objekt und dem Messer statt. Dabei erfolgt nach einer gemäß einem 1. Schritt üblicherweise im Wesentlichen vertikal nach unten erfolgenden Schneidbewegung der Objekthalteeinrichtung in einem 2. Schritt ein Rückzug oder ein Rückziehen der Objekthalteeinrichtung zur Erzeugung einer Distanz zwischen dem Objekt und dem Messer, in einem 3. Schritt eine Bewegung der Objekthalteeinrichtung im Wesentlichen vertikal nach oben und in einem 4. Schritt ein dem Rückzug oder Rückziehen entgegengesetztes Zustellen oder Zuführen der Objekthalteeinrichtung in Richtung Messer, um dann wieder eine im Wesentlichen vertikal nach unten erfolgende Schneidbewegung für die Erzeugung eines neuen Schnitts durchzuführen. Es handelt sich hierbei um eine kombinierte Vertikal- und Horizontalbewegung.

Diese sich zum Erzeugen mehrerer Schnitte wiederholende 4-schrittige kreisartige oder kreisförmige Bewegung der Objekthalteeinrichtung mit dem Objekt relativ zu einer üblicherweise feststehenden Messerhalteeinrichtung mit einem daran fixierten Messer, die auch als Pendelbewegung bezeichnet werden könnte, wird letztendlich von einer Zustellbewegung mit einer üblichen Zustelldistanz überlagert, die der Abnahme des Volumens oder der Dicke des Objekts aufgrund der abgetragenen Schnitte Rechnung trägt bzw. diese Abnahme kompensiert, um fortlaufend Schnitte mit gleicher gewünschter Schnittdicke zu erzeugen.

In der Praxis hat sich gezeigt, dass es bei manchen Anwendungen wünschenswert ist, ohne einen Rückzug der Objekthalteeinrichtung während der Erzeugung von Schnitten zu arbeiten, wodurch eine Schonung des Messers und eine geringere Geräuschentwicklung beim Betrieb des Mikrotoms erreicht wird. In diesem Fall führt die Objekthalteeinrichtung bei dem beispielhaft zuvor erläuterten Mikrotom zur Erzeugung von Schnitten lediglich eine Auf- und Abbewegung mit der überlagerten Zustellbewegung aus. Ein Rückzug und ein dem Rückzug entgegengesetztes Zustellen gemäß den oben erläuterten 2. und 4. Schritten findet dabei nicht statt.

Aus der EP 3 246 690 A1, der US 2018/136087 A1, der DE 42 05 258 A1, der DE 17 72 189 B1 sowie der US 3 628 386 A sind ebenfalls Mikrotome in unterschiedlichen Ausgestaltungen bekannt.

Der vorliegenden Erfindung liegt die Aufgabe zugrunde, ein Mikrotom der eingangs genannten Art anzugeben, wonach eine einfache und sichere Einstellung der Trimmeinrichtung sowie Aktivierung/Deaktivierung eines Rückzugs mit konstruktiv einfachen Mitteln ermöglicht ist.

Erfindungsgemäß wird die voranstehende Aufgabe durch ein Mikrotom mit den Merkmalen des Anspruchs 1 gelöst.

Dabei weist die Stelleinrichtung eine kombinierte Betätigungseinrichtung auf. Die Kombination besteht darin, dass mit der kombinierten Betätigungseinrichtung sowohl eine Einstellung der Trimmeinrichtung als auch eine Aktivierung/Deaktivierung eines mittels der Zustelleinrichtung durchführbaren Rückzugs ermöglicht ist. Es handelt sich bei der Betätigungseinrichtung somit um eine Multifunktionseinrichtung, die in vorteilhafter Weise mit derselben Hand eines Benutzers bedient werden kann, um beide Funktionen zu bewerkstelligen. Die andere Hand bleibt dabei für andere Aufgaben frei. Durch die kombinierte Ausgestaltung der Betätigungseinrichtung zur Bewerkstelligung zweier Funktionen mit einer Betätigungseinrichtung ist eine platzsparende und elegante Ausgestaltung des Mikrotoms ohne eine Überfrachtung des Mikrotoms mit verschiedensten Betätigungselementen bereitgestellt.

Im Hinblick auf eine besonders einfache Betätigung der Stelleinrichtung weist die Betätigungseinrichtung einen Drehmechanismus zur Aktivierung/Deaktivierung des Rückzugs auf.

Weiterhin im Hinblick auf eine besonders einfache Betätigung der Stelleinrichtung weist die Betätigungseinrichtung einen Drückmechanismus zur Einstellung der Trimmeinrichtung auf.

Hinsichtlich einer besonders einfachen und funktionssicheren Ausgestaltung des Mikrotoms weist der Drehmechanismus eine - vorzugsweise parallel zu einer Zustellrichtung angeordnete - Welle auf, wobei die Welle derart mit einem auf die Zustelleinrichtung oder auf die Trimmeinrichtung wirkendem Schiebeelement wirkverbunden sein kann, dass ein Drehen der Welle um eine Wellenachse eine translatorische Bewegung des Schiebeelements - vorzugsweise in einer zur Zustellrichtung senkrechten Schieberichtung - zur Folge hat. Mittels einer derartigen Welle ist eine Drehbewegung auf einfache Weise ermöglicht. Eine zu einer Zustellrichtung parallele Anordnung der Welle ermöglicht eine sehr kompakte Bauweise des Mikrotoms. Mit dem auf die Trimmeinrichtung wirkenden Schiebeelement kann eine rotatorische Bewegung der Welle in eine translatorische Bewegung des Schiebeelements umgewandelt werden. Das Schiebeelement kann hierdurch ein Schieben oder Verschieben eines Funktionselements der Trimmeinrichtung bewirken, um eine Einstellung der Trimmeinrichtung zu ermöglichen. Die Wirkverbindung zwischen Welle und Schiebeelement kann auf unterschiedliche Weise erfolgen, beispielsweise über eine gelenkige Verbindung oder eine Verbindung mit einem geeigneten Gestänge.

In konstruktiv besonders einfache Weise kann das Schiebeelement im Wesentlichen stangenförmig oder stabförmig mit einem Eingriffsbereich oder Eingriffselement für ein Eingriffselement oder einen Eingriffsbereich der Stelleinrichtung, insbesondere Zustelleinrichtung, ausgebildet sein. Dabei kann der Eingriffsbereich des Schiebeelements als Ausnehmung in dem Schiebeelement ausgebildet sein, die mit einem vorstehenden Eingriffselement der Stelleinrichtung in Eingriff gelangen kann. Alternativ hierzu kann das Eingriffselement des Schiebeelements als Vorsprung oder abstehendes Eingriffselement ausgebildet sein, der oder das mit einer Ausnehmung der Stelleinrichtung in Eingriff gelangen kann. Im Hinblick auf die konkrete Realisierung des Eingriffsvorgangs zwischen Schiebeelement und Stelleinrichtung ist auf den jeweiligen Anwendungsfall abzustellen.

Weiterhin im Hinblick auf eine konstruktiv besonders einfache Ausgestaltung kann die Welle im Wesentlichen rohrförmig, vorzugsweise im Wesentlichen als Rundrohr, mit einem in oder an der Welle ausgebildeten Eingriffsbereich oder Eingriffselement zum Eingriff mit einem Eingriffselement oder Eingriffsbereich an oder in dem Schiebeelement ausgebildet sein. Die rohrförmige Ausgestaltung oder Ausgestaltung als Rundrohr bietet die Möglichkeit, dass in dem Raum in der Welle noch weitere Funktionselemente angeordnet werden können. Beispielsweise kann hier ein Drückmechanismus für die Bedienung oder Betätigung mindestens eines weiteren Funktionselements angeordnet werden. Dabei kann der Eingriffsbereich in der Welle oder in dem Schiebeelement als Ausnehmung bzw. ein entsprechendes Eingriffselement des Schiebeelements oder der Welle als Vorsprung oder abstehendes Eingriffselement ausgebildet sein. Eine komplementäre Ausgestaltung des jeweiligen Eingriffsbereichs und des jeweiligen Eingriffselements ist besonders vorteilhaft.

Hinsichtlich einer besonders sicheren und verschleißfreien Wirkverbindung zwischen Schiebeelement und Welle kann das Schiebeelement ein schwenkbar an dem Schiebeelement angelenktes Koppelelement zur Wirkverbindung mit der Welle aufweisen. Hierdurch kann des Weiteren ein möglicherweise vorliegender räumlicher Versatz zwischen Welle und Schiebeelement ausgeglichen oder kompensiert werden. Bei einer weiteren vorteilhaften Ausgestaltung kann dabei das Koppelelement ein schwenkbar an dem Koppelelement angelenktes Eingriffselement zum Eingriff mit der Welle aufweisen. Im letztgenannten Fall wirken zwischen der Welle und dem Schiebeelement also zwei zusätzliche Bauteile, nämlich das Koppelelements und das Eingriffselement. Je nach Anwendungsfall können zwei oder auch mehrere derartige Bauteile gelenkig miteinander verbunden zwischen der Welle und dem Schiebeelement realisiert sein und wirken, um einen besonders sicheren und verschleißfreien Betrieb des Drehmechanismus und damit des gesamten Mikrotoms mit der zusätzlichen Möglichkeit des Überwindens eines räumlichen Versatzes zwischen Welle und Schiebeelement zu ermöglichen.

Weiterhin im Hinblick auf einen besonders einfachen und sicheren Betrieb des Mikrotoms kann mindestens eine vorgebbare Drehposition der Welle mittels einer Sperreinrichtung der Welle lösbar sperrbar oder fixierbar sein. Dies ermöglicht ein einfaches Beibehalten einer vorgebbaren Drehposition und damit einer vorgebbaren Betriebssituation ohne die Gefahr eines ungewollten Verstellens der Drehposition. Eine mittels der Sperreinrichtung erfolgte Sperrung oder Fixierung ist zur Veränderung der Drehposition jederzeit wieder lösbar, wozu erforderlichenfalls ein zusätzlicher Lösemechanismus realisiert sein kann.

Hinsichtlich eines besonders einfachen Drehens der Welle kann an der Welle, vorzugsweise an einem Ende der Welle, ein Steuerrad oder Einstellrad zum Angreifen mit der Hand eines Benutzers vorgesehen sein. Dabei kann das Steuerrad oder Einstellrad an seinem äußeren Umfang aufgeraut oder mit Vorsprüngen oder Noppen ausgebildet sein, um ein Rutschen einer Hand oder von Fingern eines Benutzers beim Drehen der Welle zu vermeiden. Insbesondere bei einer Realisierung eines Steuerrads oder Einstellrads an der Welle und einem aus dem Steuerrad oder Einstellrad zumindest geringfügig herausstehenden Drückelement oder Drückbereich könnte in diesem Bereich der Betätigungseinrichtung von einem Multifunktionsknopf der kombinierten Betätigungseinrichtung gesprochen werden.

Hinsichtlich einer besonders einfachen und funktionssicheren Ausgestaltung des Mikrotoms weist der Drückmechanismus ein - vorzugsweise parallel zu einer Zustellrichtung angeordnetes - stabförmiges oder stangenförmiges Drückelement auf, wobei vorzugsweise das Drückelement an einem Ende einen per Hand bedienbaren Drückbereich und an einem anderen Ende ein mittels des Drückelements verschiebbares Einstellelement aufweisen. Mittels einer derartigen Drückelements ist ein Drückvorgang auf einfache Weise ermöglicht. Eine zu einer Zustellrichtung parallele Anordnung des Drückelements ermöglicht eine sehr kompakte Bauweise des Mikrotoms. Dabei kann das Drückelement - je nach Erfordernis - aus mehreren unterschiedlich dimensionierten Elementen zusammengesetzt sein, beispielsweise aus unterschiedlich dicken Rundstabelementen, die zur Bildung eines länglichen Drückelements in einer Längsrichtung miteinander gekoppelt sind. Beispielsweise kann der Drückbereich verdickt und/oder abgeflacht ausgebildet sein, um ein einfaches Drücken des Drückelements mit einem Finger oder dem Daumen einer Hand zu ermöglichen. Das am dem Drückbereich abgewandten Ende des Drückelements angeordnete oder vorzugsweise integral ausgebildete Einstellelement dient zur Ankopplung an die oder Wirkverbindung mit der Stelleinrichtung, insbesondere der Trimmeinrichtung oder der Zustelleinrichtung.

Im Hinblick auf einen sicheren Betrieb des Mikrotoms und insbesondere der Betätigungseinrichtung kann das Einstellelement einen im Wesentlichen quaderförmigen - insbesondere klotzartigen - Abschnitt mit mindestens zwei in unterschiedlichen Höhen ausgebildeten horizontalen Bereichen zum Eingriff mit einem Steuerelement der Stelleinrichtung, vorzugsweise Trimmeinrichtung, aufweisen. Bei einem Zusammenwirken mit einer Trimmeinrichtung und insbesondere mit einem Steuerelement einer Trimmeinrichtung kann das Steuerelement im Betrieb entweder mit einem der horizontalen Bereiche oder mit keinem der horizontalen Bereiche eingreifen, um unterschiedliche Trimmwerte, beispielsweise 10 µm auf einem horizontalen Bereich und 20 µm auf einem weiteren horizontalen Bereich, einzustellen. Je nach Eindrücktiefe des Drückelements kann der Eingriff des Steuerelements mit einem der horizontalen Bereiche oder mit keinem der horizontalen Bereiche realisiert sein. Hierdurch ist eine besonders zuverlässige und sichere Vorgabe von Trimmwerten oder anderen Einstellparametern ermöglicht.

Zur Realisierung einer konstruktiv besonders eleganten und platzsparenden Ausgestaltung ist das Drückelement in der Welle des Drehmechanismus verschiebbar angeordnet, wobei das Drückelement oder ein Drückbereich zumindest im unbetätigten Zustand des Drückmechanismus aus der Welle herausragen kann. Durch die Anordnung des Drückelements in der Welle des Drehmechanismus ist eine besonders kompakte Realisierung der kombinierten Betätigungseinrichtung erreicht. Hierdurch liegt eine quasi integrierte Ausbildung von Drehmechanismus und Drückmechanismus vor. Zur sicheren Betätigung des Drückelements kann das Drückelement oder der Drückbereich zumindest im unbetätigten Zustand des Drückmechanismus aus der Welle herausragen. Hierdurch ergibt sich eine sichere Erreichbarkeit des Drückelements auch bei einer Integration oder Anordnung in der Welle des Drehmechanismus.

Zur Realisierung eines besonders komfortablen Betriebs des Mikrotoms kann das Drückelement mit einem Federmechanismus und einem Rastmechanismus zur lösbaren Fixierung unterschiedlicher Eindrücktiefen des Drückelements in der Welle und damit verbundener realisierter unterschiedlicher Trimmwerte zusammenwirken, wobei vorzugsweise der Federmechanismus und/oder der Rastmechanismus in der Welle angeordnet oder ausgebildet sind oder ist. Der Federmechanismus ermöglicht dabei ein Eindrücken des Drückelements gegen eine Federkraft und ein durch die Federkraft unterstütztes Ausrücken des Drückelements beim Loslassen des Drückelements. Eine geeignete Feder kann in der Welle des Drehmechanismus gelagert sein. In Zusammenwirkung mit dem Rastmechanismus ist eine lösbare Fixierung des Drückelements in unterschiedlichen Eindrücktiefen in der Welle ermöglicht. Hierdurch lassen sich unterschiedliche Trimmwerte in der jeweiligen Rastposition einstellen. Der Rastmechanismus kann durch geeignete Vorsprünge oder Vertiefungen in dem Drückelement und mit diesen Vorsprüngen oder Vertiefungen zusammenwirkende Rastelemente der Welle gebildet sein. Alternativ hierzu kann das Drückelement entsprechende Rastelemente und die Welle geeignete Vorsprünge oder Vertiefungen zur Bildung des Rastmechanismus aufweisen.

Bei einem Ausführungsbeispiel des Mikrotoms kann ein Rotationsmikrotom mit einem monolithischen Gehäuse realisiert werden, das einen höchst stabilen, einfachen und vibrationsfreien Betrieb des Mikrotoms ermöglicht. Der Rückzug kann dabei beispielsweise über ein Steuerrad oder Einstellrad im vorderen Bereich des Mikrotoms aktiviert oder deaktiviert werden. Hierbei ist eine einfache Ein-AusSchaltung durch beispielsweise den oben beschriebenen Drehmechanismus realisierbar. Die Trimmung kann in weiter vorteilhafter Weise mittels des oben beschriebenen Drückmechanismus in diesem Drehmechanismus integriert werden, wobei ein Drückelement aus dem Steuerrad oder Einstellrad herausragen kann.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung eines bevorzugten Ausführungsbeispiels des erfindungsgemäßen Mikrotoms anhand der Zeichnung zu verweisen. In Verbindung mit der Erläuterung des bevorzugten Ausführungsbeispiels anhand der Zeichnung werden auch im Allgemeinen bevorzugte Ausgestaltungen und Weiterbildungen der Lehre erläutert. In der Zeichnung zeigen
- Fig. 1: in einer perspektivischen Darstellung ein Ausführungsbeispiel eines erfindungsgemäßen Mikrotoms in Form eines Rotationsmikrotoms,
- Fig. 2: in einer perspektivischen Darstellung das Mikrometerwerk und die Betätigungseinrichtung des Mikrotoms aus Fig. 2, wobei das Mikrometerwerk und die Betätigungseinrichtung aus Gründen der Übersichtlichkeit in dieser Darstellung nicht miteinander gekoppelt sind,
- Fig. 3: in einer weiteren perspektivischen Darstellung das Mikrometerwerk und die Betätigungseinrichtung aus Fig. 2, wobei die Betätigungseinrichtung teilweise in einem Längsschnitt dargestellt ist, und
- Fig. 4: in einer Unteransicht das Mikrometerwerk und die Betätigungseinrichtung aus Fig. 2.

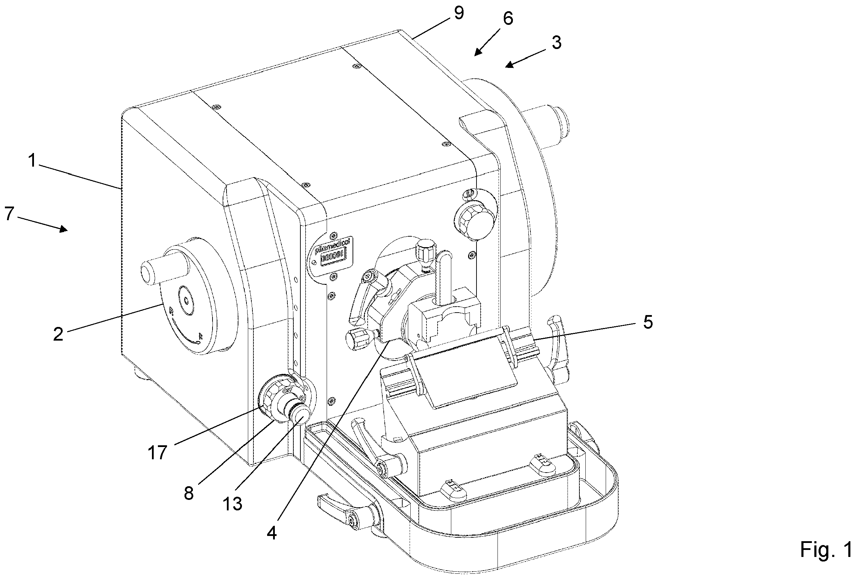

Fig. 1 zeigt in einer perspektivischen Darstellung ein Ausführungsbeispiel eines erfindungsgemäßen Mikrotoms in Form eines Rotationsmikrotoms 1, wobei das Rotationsmikrotom 1 ein einen Antrieb 2 aufweisendes Mikrometerwerk 3 zur Erzeugung einer Relativbewegung zwischen einer Objekthalteeinrichtung 4 und einer Messerhalteeinrichtung 5 bzw. einem Messer aufweist. Das Mikrometerwerk 3 ist in Fig. 1 nicht sichtbar, da es in einem Gehäuse 9 des Rotationsmikrotoms 1 angeordnet ist. Das Rotationsmikrotom 1 weist des Weiteren eine Stelleinrichtung auf, die auf das Mikrometerwerk 3 zur Beeinflussung der Relativbewegung wirkt. Die Stelleinrichtung weist eine Zustelleinrichtung 6 und eine mit der Zustelleinrichtung 6 zusammenwirkende Trimmeinrichtung 7 auf. Sowohl die Zustelleinrichtung 6 als auch die Trimmeinrichtung 7 sind in Fig. 1 nicht konkret erkennbar, dass sie ebenfalls in dem Gehäuse 9 angeordnet sind.

Im Hinblick auf eine besonders einfache und sichere Betätigung des Mikrotoms weist die Stelleinrichtung eine kombinierte Betätigungseinrichtung 8 für sowohl eine Einstellung der Trimmeinrichtung 7 als auch eine Aktivierung/Deaktivierung eines mittels der Zustelleinrichtung 6 durchführbaren Rückzugs auf.

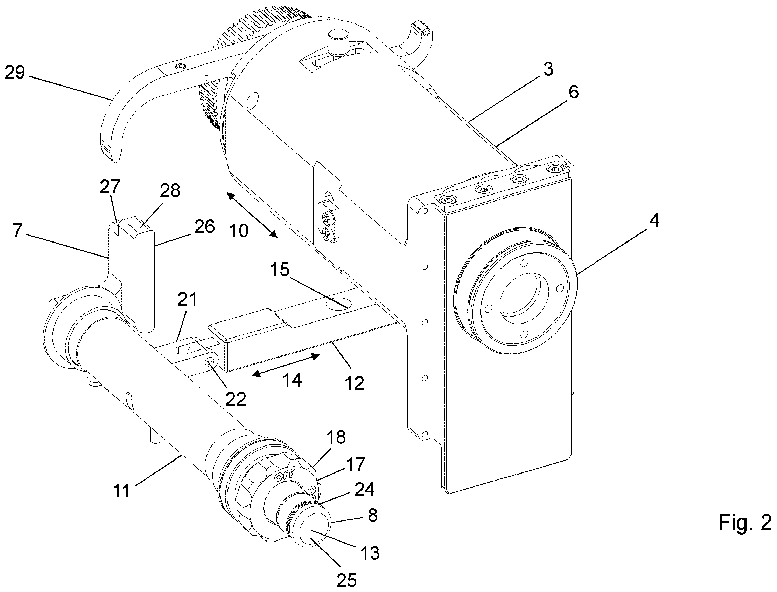

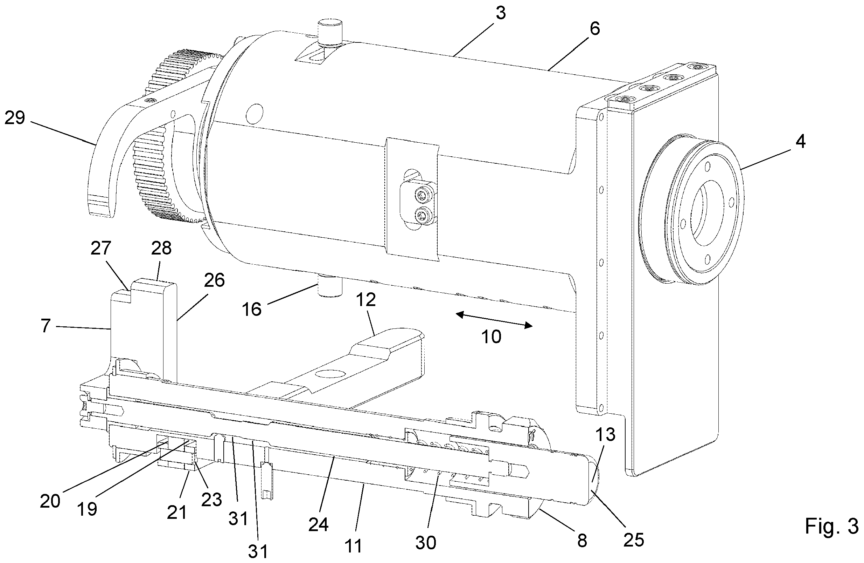

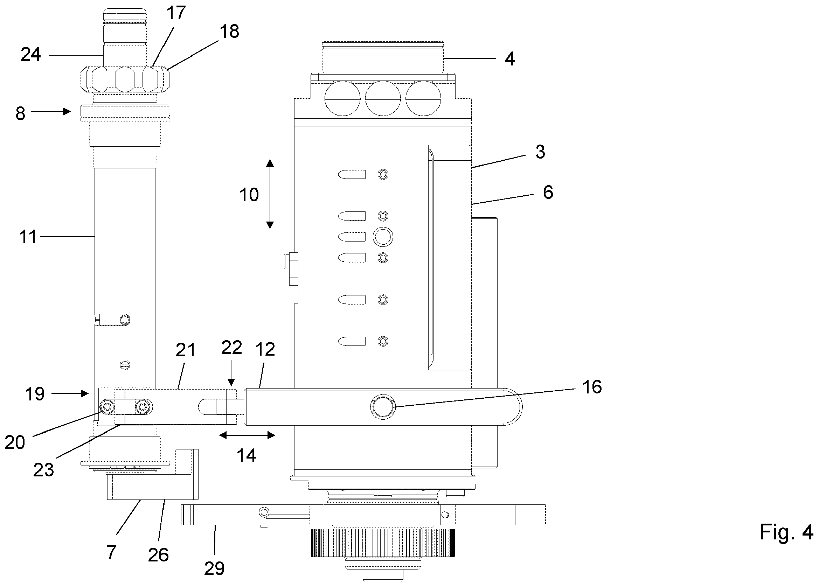

Die Fig. 2 und 3 zeigen in perspektivischen Darstellungen und die Fig. 4 in einer Unteransicht das Mikrometerwerk 3 sowie die Betätigungseinrichtung 8 in einem aus dem Gehäuse 9 ausgebauten Zustand. Dabei weist die Betätigungseinrichtung 8 einen Drehmechanismus zur Aktivierung und Deaktivierung des Rückzugs bei der Relativbewegung und einen Drückmechanismus zur Aktivierung und Deaktivierung sowie Einstellung der Trimmeinrichtung 7 auf. Hierzu ist die Betätigungseinrichtung 8 als kombinierte Betätigungseinrichtung 8 ausgebildet.

Der Drehmechanismus weist eine parallel zu einer Zustellrichtung 10 angeordnete Welle 11 auf, wobei die Welle 11 derart mit einem auf die Zustelleinrichtung 6 wirkendem Schiebeelement 12 wirkverbunden oder gekoppelt ist, dass ein Drehen der Welle 11 um eine Wellenachse 13 eine translatorische Bewegung des Schiebeelements 12 in einer zur Zustellrichtung 10 senkrechten Schieberichtung 14 zur Folge hat. Das Schiebeelement 12 ist im Wesentlichen stangenförmig oder stabförmig mit einem als Ausnehmung 15 ausgebildeten Eingriffsbereich für ein Eingriffselement der Zustelleinrichtung 6 ausgebildet. Durch ein Drehen der Welle 11 um die Wellenachse 13 wird das Schiebeelement 12 in Schieberichtung 14 verschoben, wobei ein Eingriff zwischen der Ausnehmung 15 und dem Eingriffselement 16 - je nach Drehrichtung - zu einer Aktivierung oder Deaktivierung des Rückzugs der mit der Zustelleinrichtung 6 erzeugten Relativbewegung führt. Dabei wird das Eingriffselement 16 an der Zustelleinrichtung 6 verschoben. Auf der Welle 11 ist ein Steuerrad 17 mit Noppen 18 angeordnet, wobei die Welle 11 mittels des Steuerrads 17 drehbar ist, um zwischen einem "On"-Zustand - Aktivierung - und einem "Off"-Zustand - Deaktivierung - des Rückzugs umzuschalten.

Die Welle 11 ist rohrförmig ausgebildet, wobei sie einen in der Welle 11 ausgebildeten Eingriffsbereich in Form einer Ausnehmung 19 zum Eingriff mit einem Eingriffselement 20 des Schiebeelements 12 aufweist. Hierdurch kann eine sichere Umwandlung einer rotatorischen Bewegung der Welle 11 in eine translatorische Bewegung des Schiebeelements 12 erreicht werden.

Das Schiebeelement 12 weist ein schwenkbar an dem Schiebeelement 12 angelenktes Koppelelement 21 zur Wirkverbindung mit der Welle 11 auf. Ein Verschwenken des Koppelelements 21 relativ zum Schiebeelement 12 erfolgt um eine Schwenkachse 22. Das Eingriffselement 20 ist am dem Schiebeelement 12 abgewandten Ende des Koppelelements 21 schwenkbar an dem Schiebeelement 12 angelenkt. Diese Verschwenkbewegung erfolgt um eine Schwenkachse 23.

Der Drückmechanismus zur Einstellung der Trimmeinrichtung 7 weist ein stabförmiges Drückelement 24 auf, das parallel zu der Zustellrichtung 10 angeordnet ist. Das Drückelement 24 ist in der rohrförmigen Welle 11 angeordnet, um eine kombinierte Betätigungseinrichtung 8 zu bilden. An einem Ende weist das Drückelement 24 einen per Hand bedienbaren Drückbereich 25 und an einem entgegengesetzten Ende ein mittels des Drückelements 24 verschiebbares Einstellelement 26 auf.

Das Einstellelement 26 weist einen im Wesentlichen quaderförmigen Abschnitt mit zwei in unterschiedlichen Höhen ausgebildeten horizontalen Bereichen 27, 28 zum Eingriff mit einem Steuerelement 29 der Trimmeinrichtung 7 auf. Das Steuerelement 29 wirkt im Betrieb entweder mit einem der beiden horizontalen Bereichen 27, 28 oder mit keinem dieser Bereiche 27, 28 zusammen. Je nach Zusammenwirkung der horizontalen Bereiche 27, 28 mit dem Steuerelement 29 sind unterschiedliche Trimmwerte einstellbar. Der Eingriff des Steuerelements 29 mit dem Einstellelement 26 bzw. den horizontalen Bereichen 27, 28 wird über die Drücktiefe des Drückelements 24 in der Welle 11 und damit über das Ausmaß bzw. die Distanz der Verschiebung des Einstellelement 26 eingestellt. Unterschiedliche Drücktiefen entsprechen dabei unterschiedlichen Trimmwerten.

Das Drückelement 24 ist in der Welle 11 des Drehmechanismus verschiebbar angeordnet oder gelagert, wobei das Drückelement 24 oder der Drückbereich 25 zumindest im unbetätigten Zustand des Drückmechanismus aus der Welle 11 herausragt. Des Weiteren wirkt das Drückelement 24 mit einem eine Feder 30 aufweisenden Federmechanismus und einem Rastmechanismus zur lösbaren Fixierung unterschiedlicher Eindrücktiefen des Drückelements 24 in der Welle 11 zusammen. Mit diesen unterschiedlichen Eindrücktiefen sind unterschiedliche Trimmwerte realisiert. Der Federmechanismus und der Rastmechanismus sind in der Welle 11 angeordnet, wobei der Rastmechanismus Ausnehmungen 31 in dem Drückelement 24 aufweist, die mit einem Vorsprung 32 in der Welle 11 zusammenwirken. Die Feder 30 ist als Schraubenfeder oder Spiralfeder ausgebildet, wobei grundsätzlich auch andere Federn wie beispielsweise Blattfedern zum Einsatz kommen könnten.

Hinsichtlich weiterer vorteilhafter Ausgestaltungen des erfindungsgemäßen Mikrotoms wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einschränkt.

### Bezugszeichenliste

- 1: Rotationsmikrotom
- 2: Antrieb
- 3: Mikrometerwerk
- 4: Objekthalteeinrichtung
- 5: Messerhalteeinrichtung
- 6: Zustelleinrichtung
- 7: Trimmeinrichtung
- 8: Betätigungseinrichtung
- 9: Gehäuse
- 10: Zustellrichtung
- 11: Welle
- 12: Schiebeelement
- 13: Wellenachse
- 14: Schieberichtung
- 15: Ausnehmung
- 16: Eingriffselement
- 17: Steuerrad
- 18: Noppen
- 19: Ausnehmung
- 20: Eingriffselement
- 21: Koppelelement
- 22: Schwenkachse
- 23: Schwenkachse
- 24: Drückelement
- 25: Drückbereich
- 26: Einstellelement
- 27: horizontaler Bereich
- 28: horizontaler Bereich
- 29: Steuerelement
- 30: Feder
- 31: Ausnehmung
- 32: Vorsprung

## Patentansprüche

1. Mikrotom, insbesondere Rotationsmikrotom (1), mit einem einen Antrieb (2) aufweisenden Mikrometerwerk (3) zur Erzeugung einer Relativbewegung zwischen einer Objekthalteeinrichtung (4) und einem Messer und einer auf das Mikrometerwerk (3) wirkenden Stelleinrichtung zur Beeinflussung der Relativbewegung,
wobei die Stelleinrichtung eine Zustelleinrichtung (6) und eine mit der Zustelleinrichtung (6) zusammenwirkende Trimmeinrichtung (7) sowie eine kombinierte Betätigungseinrichtung (8) für sowohl eine Einstellung der Trimmeinrichtung (7) als auch eine Aktivierung/Deaktivierung eines mittels der Zustelleinrichtung (6) durchführbaren Rückzugs aufweist und
wobei die Betätigungseinrichtung (8) einen Drehmechanismus zur Aktivierung/Deaktivierung des Rückzugs und einen Drückmechanismus zur Einstellung der Trimmeinrichtung aufweist,
**dadurch gekennzeichnet, dass** der Drückmechanismus ein stabförmiges oder stangenförmiges Drückelement (24) aufweist und dass das Drückelement (24) in einer Welle (11) des Drehmechanismus verschiebbar angeordnet ist, wobei das Drückelement (24) oder ein Drückbereich (25) zumindest im unbetätigten Zustand des Drückmechanismus aus der Welle (11) herausragen kann.

2. Mikrotom nach Anspruch 1, **dadurch gekennzeichnet, dass** die Welle (11) parallel zu einer Zustellrichtung (10) angeordnet ist.

3. Mikrotom nach Anspruch 2, **dadurch gekennzeichnet, dass** die Welle (11) derart mit einem auf die Zustelleinrichtung (6) oder auf die Trimmeinrichtung (7) wirkendem Schiebeelement (12) wirkverbunden ist, dass ein Drehen der Welle (11) um eine Wellenachse (13) eine translatorische Bewegung des Schiebeelements zur Folge hat.

4. Mikrotom nach Anspruch 3, **dadurch gekennzeichnet, dass** die Bewegung des Schiebeelements in einer zur Zustellrichtung (10) senkrechten Schieberichtung (14) realisiert ist.

5. Mikrotom nach Anspruch 3 oder 4, **dadurch gekennzeichnet, dass** das Schiebeelement (12) stangenförmig oder stabförmig mit einem Eingriffsbereich oder Eingriffselement für ein Eingriffselement (16) oder einen Eingriffsbereich der Stelleinrichtung oder Zustelleinrichtung (6) ausgebildet ist.

6. Mikrotom nach einem der Ansprüche 1 bis 5, **dadurch gekennzeichnet, dass** die Welle (11) rohrförmig oder als Rundrohr mit einem in oder an der Welle (11) ausgebildeten Eingriffsbereich oder Eingriffselement zum Eingriff mit einem Eingriffselement (20) oder Eingriffsbereich an oder in dem Schiebeelement (12) ausgebildet ist.

7. Mikrotom nach einem der Ansprüche 3 bis 6, **dadurch gekennzeichnet, dass** das Schiebeelement (12) ein schwenkbar an dem Schiebeelement (12) angelenktes Koppelelement (21) zur Wirkverbindung mit der Welle (11) aufweist, wobei das Koppelelement (21) ein schwenkbar an dem Koppelelement (21) angelenktes Eingriffselement (20) zum Eingriff mit der Welle (11) aufweist.

8. Mikrotom nach einem der Ansprüche 1 bis 7, **dadurch gekennzeichnet, dass** mindestens eine vorgebbare Drehposition der Welle (11) mittels einer Sperreinrichtung der Welle (11) lösbar sperrbar oder fixierbar ist.

9. Mikrotom nach einem der Ansprüche 1 bis 8, **dadurch gekennzeichnet, dass** das Drückelement (24) an einem Ende einen per Hand bedienbaren Drückbereich (25) und an einem anderen Ende ein mittels des Drückelements (24) verschiebbares Einstellelement (26) aufweist.

10. Mikrotom nach Anspruch 9, **dadurch gekennzeichnet, dass** das Drückelement (24) parallel zu einer Zustellrichtung (10) angeordnet ist.

11. Mikrotom nach Anspruch 9 oder 10, **dadurch gekennzeichnet, dass** das Einstellelement (26) einen quaderförmigen oder klotzartigen Abschnitt mit mindestens zwei in unterschiedlichen Höhen ausgebildeten horizontalen Bereichen (27, 28) zum Eingriff mit einem Steuerelement (29) der Stelleinrichtung oder Trimmeinrichtung (7) aufweist.

12. Mikrotom nach einem der Ansprüche 1 bis 11, **dadurch gekennzeichnet, dass** das Drückelement (24) mit einem Federmechanismus und einem Rastmechanismus zur lösbaren Fixierung unterschiedlicher Eindrücktiefen des Drückelements (24) in der Welle (11) und damit verbundener realisierter unterschiedlicher Trimmwerte zusammenwirkt.

13. Mikrotom nach Anspruch 12, **dadurch gekennzeichnet, dass** der Federmechanismus und/oder der Rastmechanismus in der Welle (11) angeordnet oder ausgebildet sind oder ist.

## Claims

1. Microtome, in particular rotation microtome (1), having a micrometre mechanism (3) which has a drive (2) for producing a relative movement between an object retention device (4) and a blade and an adjustment device which acts on the micrometre mechanism (3) in order to influence the relative movement, wherein the adjustment device has a feed device (6) and a trimming device (7) which cooperates with the feed device (6), and a combined activation device (8) for both adjustment of the trimming device (7) and an activation/deactivation of a retraction which can be carried out by means of the feed device (6) and
wherein the activation device (8) has a rotation mechanism for activating/deactivating the retraction and a pressing mechanism for adjusting the trimming device,
**characterised in that** the pressing mechanism has a rod-like or bar-like pressing element (24) and **in that** the pressing element (24) is displaceably arranged in a shaft (11) of the rotation mechanism, wherein the pressing element (24) or a pressing region (25) at least in the inactivated state of the pressing mechanism can protrude from the shaft (11).

2. Microtome according to claim 1, **characterised in that** the shaft (11) is arranged parallel with a feed direction (10).

3. Microtome according to claim 2, **characterised in that** the shaft (11) is actively connected to a sliding element (12) which acts on the feed device (6) or on the trimming device (7) in such a manner that a rotation of the shaft (11) about a shaft axis (13) results in a translational movement of the sliding element.

4. Microtome according to claim 3, **characterised in that** the movement of the sliding element is carried out in a sliding direction (14) which is perpendicular relative to the feed direction (10).

5. Microtome according to claim 3 or 4, **characterised in that** the sliding element (12) is constructed in a rod-like or bar-like manner with an engagement region or engagement element for an engagement element (16) or an engagement region of the adjustment device or feed device (6).

6. Microtome according to any one of claims 1 to 5, **characterised in that** the shaft (11) is constructed in a tubular manner or in the form of a round pipe having an engagement region or engagement element which is formed in or on the shaft (11) for engagement with an engagement element (20) or engagement region on or in the sliding element (12).

7. Microtome according to any one of claims 3 to 6, **characterised in that** the sliding element (12) has a coupling element (21) which is pivotably arranged on the sliding element (12) for active connection to the shaft (11), wherein the coupling element (21) has an engagement element (20) which is pivotably articulated to the coupling element (21) for engagement with the shaft (11).

8. Microtome according to any one of claims 1 to 7, **characterised in that** at least one predeterminable rotation position of the shaft (11) can be releasably blocked or fixed by means of a blocking device of the shaft (11).

9. Microtome according to any one of claims 1 to 8, **characterised in that** the pressing element (24) has at one end a pressing region (25) which can be operated manually and at another end an adjustment element (26) which can be displaced by means of the pressing element (24).

10. Microtome according to claim 9, **characterised in that** the pressing element (24) is arranged parallel with a feed direction (10).

11. Microtome according to claim 9 or 10, **characterised in that** the adjustment element (26) has a parallelepipedal or block-like portion having at least two horizontal regions (27, 28) which are formed at different heights for engagement with a control element (29) of the adjustment device or trimming device (7).

12. Microtome according to any one of claims 1 to 11, **characterised in that** the pressing element (24) cooperates with a resilient mechanism and a locking mechanism for releasably fixing different indentation depths of the pressing element (24) in the shaft (11) and different associated trimming values which are carried out.

13. Microtome according to claim 12, **characterised in that** the resilient mechanism and/or the locking mechanism is/are arranged or formed in the shaft (11).

## Revendications

1. Microtome, plus particulièrement microtome rotatif (1), avec un mécanisme micrométrique (3) comprenant un dispositif d'entraînement (2), afin de générer un mouvement relatif entre un dispositif de support d'objet (4) et un couteau et un dispositif de réglage agissant sur le mécanisme micrométrique (3) afin de contrôler le mouvement relatif,
dans lequel le dispositif de réglage comprend un dispositif d'avance (6) et un dispositif de coupe (7) interagissant avec le dispositif d'avance (6) ainsi qu'un dispositif d'actionnement combiné (8) aussi bien pour un réglage du dispositif de coupe (7) que pour une activation/désactivation d'un retrait pouvant être réalisée au moyen du dispositif d'avance (6) et
dans lequel le dispositif d'actionnement (8) comprend un mécanisme de rotation pour l'activation/désactivation du retrait et un mécanisme de pression pour le réglage du dispositif de coupe,
**caractérisé en ce que** le mécanisme de pression comprend un élément de pression en forme de barre ou de tige (24) et **en ce que** l'élément de pression (24) est disposé de manière coulissante dans un arbre (11) du mécanisme de rotation, dans lequel l'élément de pression (24) ou une partie de pression (25) peut dépasser, au moins dans l'état non actionné du mécanisme de pression, hors de l'arbre (11).

2. Microtome selon la revendication 1, **caractérisé en ce que** l'arbre (11) est disposé parallèlement à une direction d'avance (10).

3. Microtome selon la revendication 2, **caractérisé en ce que** l'arbre (11) est relié de manière fonctionnelle avec un élément coulissant (12) agissant sur le dispositif d'avance (6) ou sur le dispositif de coupe (7) de sorte qu'une rotation de l'arbre (11) autour d'un axe d'arbre (13) produit un mouvement de translation de l'élément coulissant.

4. Microtome selon la revendication 3, **caractérisé en ce que** le mouvement de l'élément coulissant est effectué dans une direction de coulissement (14) perpendiculaire à une direction d'avance (10).

5. Microtome selon la revendication 3 ou 4, **caractérisé en ce que** l'élément coulissant (12) présente la forme d'une tige ou d'une barre, avec une zone d'emboîtement ou un élément d'emboîtement réalisé pour un élément d'emboîtement (16) ou une zone d'emboîtement du dispositif de réglage ou le dispositif d'avance (6).

6. Microtome selon l'une des revendications 1 à 5, **caractérisé en ce que** l'arbre (11) présente une forme tubulaire ou est réalisé sous la forme d'un tube rond avec une zone d'emboîtement ou un élément d'emboîtement réalisé dans ou sur l'arbre (11) pour l'emboîtement avec un élément d'emboîtement (20) ou une zone d'emboîtement sur ou dans l'élément coulissant (12).

7. Microtome selon l'une des revendications 3 à 6, **caractérisé en ce que** l'élément coulissant (12) comprend un élément de couplage (21) articulé de manière pivotante par rapport à l'élément coulissant (12) pour une relation fonctionnelle avec l'arbre (11), dans lequel l'élément de couplage (21) comprend un élément d'emboîtement (20) articulé de manière pivotante par rapport à l'élément de couplage (21) pour un emboîtement avec l'arbre (11).

8. Microtome selon l'une des revendications 1 à 7, **caractérisé en ce qu'**au moins une position de rotation prédéterminée de l'arbre (11) peut être bloquée ou fixée de manière amovible au moyen d'un dispositif de blocage de l'arbre (11).

9. Microtome selon l'une des revendications 1 à 8, **caractérisé en ce que** l'élément de pression (24) comprend, à une extrémité, une zone de pression (25) pouvant être actionnée manuellement et, à une autre extrémité, un élément de réglage (26) pouvant être coulissé au moyen de l'élément de pression (24).

10. Microtome selon la revendication 9, **caractérisé en ce que** l'élément de pression (24) est disposé parallèlement à une direction d'avance (10).

11. Microtome selon la revendication 9 ou 10, **caractérisé en ce que** l'élément de réglage (26) comprend une portion parallélépipédique ou en forme de plot avec au moins deux parties horizontales (27, 28) réalisées à des hauteurs différentes, pour l'emboîtement avec un élément de commande (29) du dispositif de réglage ou du dispositif de coupe (7).

12. Microtome selon l'une des revendications 1 à 11, **caractérisé en ce que** l'élément de pression (24) interagit avec un mécanisme à ressort et un mécanisme d'encliquetage pour la fixation amovible de différentes profondeurs d'enfoncement de l'élément de pression (24) dans l'arbre (11) et de valeurs de coupe différentes liées à celles-ci.

13. Microtome selon la revendication 12, **caractérisé en ce que** le mécanisme à ressort et/ou le mécanisme d'encliquetage sont disposés ou réalisés dans l'arbre (11).
